# EUROPÄISCHE PATENTANMELDUNG

(11) **EP 0 953 808 A2**
(43) Veröffentlichungstag der Anmeldung: **03.11.1999**
(21) Anmeldenummer: 99108442.7
(22) Anmeldetag: 30.04.1999
(51) Int. Cl.: F24D 3/10, F24D 19/10

(54) **Hydraulikbaugruppe mit Drucksensor für eine kombinierte Heizwasser- und Sanitärwasseranlage**

(30) Priorität: 02.05.1998 DE 19819714
(71) Anmelder: WILO GmbH, D-44263 Dortmund (DE)
(72) Erfinder: Materne, Thomas, 59348 Lüdinghausen (DE); Kettner, Thomas Dr., 45711 Datteln (DE)
(74) Vertreter: COHAUSZ HANNIG DAWIDOWICZ & PARTNER

(57) **Zusammenfassung**

Die Erfindung betrifft eine Hydraulikbaugruppe 1 für eine kombinierte Heizwasser- und Sanitärwasseranlage, mit einer Vorrichtung zur Erkennung einer Entnahme von Sanitärwasser aus dem Sanitärwasserkreislauf, über deren Ausgangssignale die Hydraulikbaugruppe 1 und/oder die kombinierte Heizwasser- und Sanitärwasseranlage steuerbar oder regelbar ist, wobei die Vorrichtung zur Erkennung einer Entnahme von Sanitärwasser ein elektronischer Drucksensor 13a, 13b ist.

## Beschreibung

Die Erfindung betrifft eine Hydraulikbaugruppe für eine kombinierte Heizwasser- und Sanitärwasseranlage, mit einer Vorrichtung zur Erkennung einer Entnahme von Sanitärwasser aus dem Sanitärwasserkreislauf, über deren Ausgangssignale die Hydraulikbaugruppe und/oder die kombinierte Heizwasser- und Sanitärwasseranlage steuerbar oder regelbar ist.

Hydraulikbaugruppen sind insbesondere aus der DE 196 32 605 bekannt. Sie werden eingesetzt, wenn eine einzige Wärmequelle, insbesondere ein Gas- oder Ölbrenner dazu dient, sowohl das für Heizkörper zum Heizen der Umgebung bestimmte Wasser als auch das Sanitärwasser für verschiedene Verbraucher zu erhitzen. Dazu sind die Hydraulikbaugruppen in bekannter Weise an die Rohrleitungen der Heizwasseranlage sowie an die Rohrleitungen der Sanitärwasseranlage anschließbar.

Eine Hydraulikbaugruppe der eingangs genannten Art ist aus der EP 0 568 122 bekannt. Dabei erfolgt die Erkennung der Entnahme von Sanitärwasser (Brauchwasser) hydraulisch über einen Differenzdruck. Dieser Differenzdruck bewirkt eine translatorische Bewegung einer Membran, die auf einen Kolben weitergeleitet wird. Der Kolben ist seinerseits über eine Stange mit einem angeflanschten Mikroschalter verbunden. Die Bewegung der Membran wird somit mechanisch über den Kolben und die Stange an den Mikroschalter übertragen und führt dort zu einem Schaltvorgang, welcher von der Elektronik des Heizkessels erkannt und verarbeitet wird.

Diese bekannte Bauweise ist vergleichsweise aufwendig und aufgrund der Vielzahl der notwendigen Bauteile störanfällig. Darüber hinaus sind konstruktionsbedingt große Flächen für die Membran und Flanschdeckel erforderlich, um auch bei einem geringem Differenzdruck eine ausreichende Kraft zur Bewegung des Kolbens und der Stange zu erzeugen. Daher ist der Platzbedarf für einen derartigen Aufbau erheblich. Andererseits bewirken diese großen Flächen bei hohen Systemdrücken und/oder bei kurzzeitigen Druckspitzen eine sehr hohe mechanische Belastung der Gehäuseteile. Insbesondere bei der Verwendung von Kunststoffen als Werkstoff für das Gehäuse oder den Membrandeckel kann es dabei durch Überbeanspruchung zu Zerstörungen kommen.

Aufgabe der Erfindung ist es, eine konstruktiv einfache, preiswerte und leicht handhabbare Hydraulikbaugruppe der eingangs genannten Art zu schaffen, die bei kleinen Abmessungen sowohl bei kleinen als auch bei großen Systemdrücken störungsunanfällig einsetzbar ist.

Diese Aufgabe wird erfindungsgemäß durch eine Hydraulikbaugruppe mit den Merkmalen des Anspruchs 1 gelöst.

Der wesentliche Vorteil besteht darin, daß die Vorrichtung zur Erkennung einer Entnahme von Sanitärwasser mindestens einen elektronischen Drucksensor umfaßt. Mechanisch arbeitende Membrane und Mittel zur mechanischen Signalweiterleitung sind nicht erforderlich. Hierdurch kann auf eine erhebliche Anzahl großer Bauteile verzichtet werden. Die Hydraulikbaugruppe ist daher bei einfacher Konstruktion kostengünstig herzustellen und zeichnet sich durch eine platzsparende und gewichtsreduzierte Bauweise aus. Sie arbeitet bei geringen und bei hohen Systemdrücken mit einer hohen Betriebssicherheit und verkraftet auch kurzzeitig auftretende Druckspitzen ohne der Gefahr von Zerstörungen Die Handhabung ist einfach und die Hydraulikbaugruppe ist schnell und einfach zu montieren und bei Bedarf wieder zu demontieren.

Derartige Drucksensoren können dabei an verschiedenen Stellen angeordnet sein. Es ist möglich, durch Drucksensoren sowohl den Druck im Sanitärwasserkreislauf als auch den Druck im Heizwasserkreislauf wahlweise oder gleichzeitig zu ermitteln.

In Abhängigkeit von den von dem Drucksensor erzeugten Ausgangssignalen kann vorzugsweise eine in die Hydraulikbaugruppe integrierte Pumpe und/oder ein in die Hydraulikbaugruppe integriertes Dreiwegeventil gesteuert oder geregelt werden.

Auf diese Weise kann in besonders vorteilhafter Weise eine elektronisch regelbare Pumpe derart geregelt werden, daß der Volumenstrom und/oder der Pumpendruck konstant bleibt.

In einer bevorzugten Ausführungsform kann der Drucksensor in einem wasserdichten Gehäuse angeordnet sein und mit diesem eine gegen die Umgebung abgedichtete Einheit bilden.

Dabei ist es besonders günstig wenn eine derartige gegen die Umgebung abgedichtete Einheit über einen Schnellverschluß, insbesondere über eine Nadel, oder durch ein Einschraubgewinde mit der Wandung eines Strömungskanals verbindbar ist. Der Sensor befindet sich dabei direkt im zu analysierenden Medium. Die Abdichtung zwischen dem Gehäuse der Einheit und der Wandung des Strömungskanals kann durch einen O-Ring erfolgen.

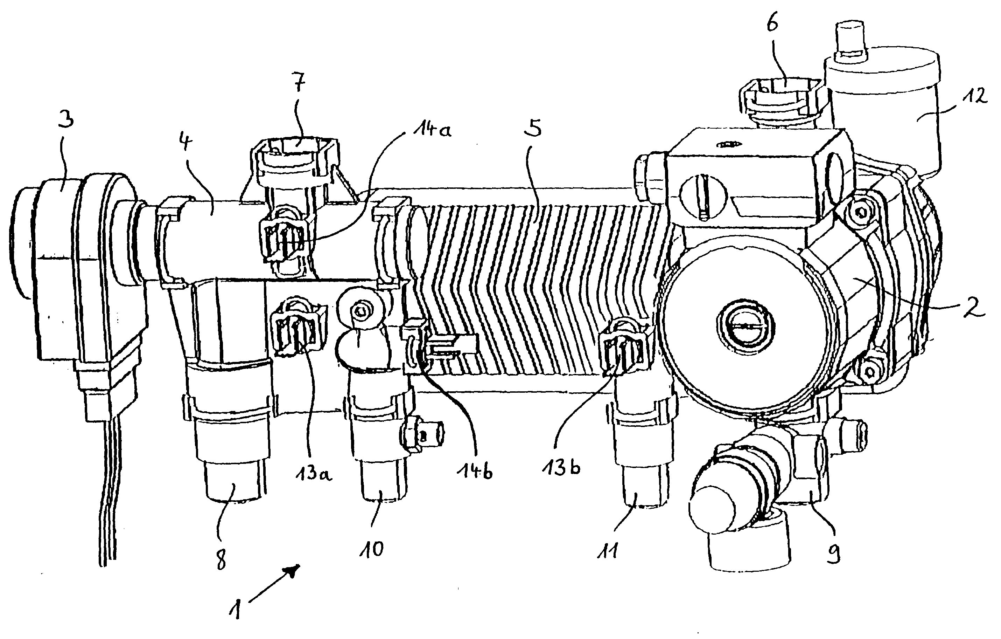

Weitere Vorteile und Merkmale der Erfindung ergeben sich aus der nachfolgenden Beschreibung und dem in der Zeichnung dargestellten Ausführungsbeispiel.

Die Zeichnung zeigt eine erfindungsgemäße Hydraulikbaugruppe.

Die Hydraulikbaugruppe 1 weist im wesentlichen eine Pumpe 2, ein von einem Stellmotor 3 betätigbares Dreiwegeventil 4 und einen zentral angeordneten Wärmetauscher 5 zum Erwärmen des Sanitärwassers auf. Sie ist fertig vormontiert über ihre sechs Anschlüsse 6, 7, 8, 9, 10 und 11 auf einfache Weise schnell an die nicht dargestellten Rohrleitungen der Heizwasser- und Sanitärwasseranlage anschließbar, wobei die Anschlüsse folgendermaßen erfolgen: Anschluß 6 führt zum nicht dargestellten Hauptwärmetauscher am Heizungskessel, Anschluß 7 führt das vom Hauptwärmetauscher erwärmte Wasser zurück in die Hydraulikbaugruppe 1. Anschluß 8 liegt am Vorlauf und Anschluß 9 am Rücklauf des Heizwasserkreislaufs, Anschluß 10 befindet sich am Vorlauf und Anschluß 11 am Rücklauf des Sanitärwasserkreislaufs. Ein automatisch arbeitender Entlüfter 12 ist für den Heizwasserkreislauf vorgesehen.

Die Hydraulikbaugruppe 1 weist zwei über Schnellverschlüsse angeschlossene elektronische Drucksensoren 13a und 13b auf. Ein Drucksensor 13a ist zur Erfassung des Systemdrucks im Heizwasserkreislauf beim Anschluß 8 angeordnet. Ein zweiter Drucksensor 13b befindet sich an dem Anschluß 11 für den Rücklauf des Sanitärwassers.

Die von den Drucksensoren 13a und 13b erzeugten Ausgangssignale werden der nicht dargestellten Regelungseinheit der Hydraulikbaugruppe 1 und/oder der Regelungseinheit des Heizungskessels zugeführt. Die Hydraulikbaugruppe 1 kann auch mit nur einem Drucksensoren 13a oder 13b betrieben werden.

Außerdem erfaßt ein erster Temperatursensor 14a die Temperatur am Rücklauf des vom Heizkessel erwärmten Wassers am Anschluß 7. Ein zweiter Temperatursensor 14b ist an dem Anschluß 10 vorgesehen für die Ermittlung der Wassertemperatur in dem Vorlauf des Sanitärwassers.

Standardmäßig wird in herkömmlichen Hydraulikbaugruppen eine Heizungspumpe mit manuell umschaltbaren Drehzahlstufen eingesetzt. Dabei ist eine Bypassleitung mit federbelastetem Ventil zwischen dem Heizwasservorlauf und dem Heizwasserrücklauf sinnvoll, um im Teillastbetrieb möglicherweise auftretende Druckspitzen abbauen zu können. Außerdem ist zwischen dem Heizwasservorlauf und der Bypassleitung eine Differenzdruckabfrage erforderlich, die überprüft, ob die Bypassleitung ordnungsgemäß arbeitet.

Verwendet man statt dessen eine elektronisch regelbare Heizungspumpe 2, so ist die Bypassleitung und die Differenzdruckabfrage nicht erforderlich. Einsetzbar ist hier eine selbständig- oder eine extern steuerbare oder regelbare Heizungspumpe 2. Über diese kann insbesondere der Volumenstrom geregelt bzw. der Pumpendruck konstant gehalten werden. Bei einer regelbaren Pumpe 2 besteht ferner die Möglichkeit, Informationen über ihren Betriebszustand (z.B. Stromaufnahme, Drehzahl der Pumpe, Leistungsaufnahme etc.) an die Regeleinheit des Heizungskessels oder der Hydraulikbaugruppe zu übergeben. Diese Daten können beispielsweise zur Regelung des Kessels oder zur Informationsanzeige verwendet werden.

Nachfolgend wird die Funktionsweise der Hydraulikbaugruppe beschrieben. Wenn kein Brauchwasser entnommen wird befindet sich das Sanitärwassersystem in einem statischen Zustand. Der Drucksensor übergibt der Regeleinheit der Hydraulikbaugruppe und/oder der Regeleinheit des Heizungsgerätes einen hierfür bestimmten Wert beispielsweise in Form eines Spannungs- oder Stromwertes. Sobald jedoch Sanitärwasser gebraucht, also aus dem Sanitärwassersystem entnommen wird, erfolgt ein Wassertransport durch den Sanitärwasserbereich der Hydraulikbaugruppe. Durch das strömende Medium wird im Bereich des Drucksensors eine Druckveränderung hervorgerufen. Der dann anstehende Druck unterscheidet sich von dem Druck im statischen Zustand. Dieser veränderte Druck wird von dem Drucksensor erkannt und an die Regeleinheit weitergeleitet. Diese bewirkt ihrerseits beispielsweise das Umschalten des Dreiwegeventils oder gegebenenfalls Änderungen anderer Betriebsparameter am Heizungskessel.

Alternativ hierzu kann auch der Totaldruck durch einen erfindungsgemäßen Drucksensor erkannt werden. Dazu wird ein oder zwei Drucksensoren an der Hydraulikbaugruppe im Vor- und/oder Rücklauf des Heizungs- bzw. Sanitärwasserkreislaufs angeordnet. Besonders günstige Stellen für die Anordnung eines Drucksensors sind die Kunststoffteile des Dreiwegeventils oder des Pumpengehäuses. Eine Änderung des Totaldrucks wird vom Sensor erkannt und wie zuvor beschrieben über ein elektrisches Signal an die Regeleinheit der Hydraulikbaugruppe oder des Heizungskessels weitergegeben.

## Patentansprüche

1. Hydraulikbaugruppe für eine kombinierte Heizwasser- und Sanitärwasseranlage, mit einer Vorrichtung zur Erkennung einer Entnahme von Sanitärwasser aus dem Sanitärwasserkreislauf, über deren Ausgangssignale die Hydraulikbaugruppe und/oder die kombinierte Heizwasser- und Sanitärwasseranlage steuerbar oder regelbar ist, **dadurch gekennzeichnet,** daß die Vorrichtung zur Erkennung einer Entnahme von Sanitärwasser mindestens einen elektronischen Drucksensor (13a, 13b) umfaßt.

2. Hydraulikbaugruppe nach Anspruch 1, **dadurch gekennzeichnet,** daß durch den Drucksensor (13b) der Druck im Sanitärwasserkreislauf ermittelbar ist.

3. Hydraulikbaugruppe nach Anspruch 1, **dadurch gekennzeichnet,** daß durch den Drucksensor (13a) der Druck im Heizwasserkreislauf ermittelbar ist.

4. Hydraulikbaugruppe nach Anspruch 2 oder 3, **dadurch gekennzeichnet,** daß durch den Drucksensor (13a, 13b) eine in die Hydraulikbaugruppe (1) integrierte Pumpe (2) und/oder ein in die Hydraulikbaugruppe (1) integriertes Dreiwegeventil (4) steuerbar oder regelbar ist.

5. Hydraulikbaugruppe nach Anspruch 4, **dadurch gekennzeichnet,** daß die Pumpe (2) derart elektronisch regelbar ist, daß der Volumenstrom und/oder der Pumpendruck konstant ist.

6. Hydraulikbaugruppe nach einem der vorherigen Ansprüche, **dadurch gekennzeichnet,** daß der Drucksensor (13a, 13b) in einem wasserdichten Gehäuse angeordnet ist und mit diesem eine Einheit bildet.

7. Hydraulikbaugruppe nach Anspruch 6, **dadurch gekennzeichnet,** daß das wasserdichte Gehäuse über einen Schnellverschluß oder durch ein Einschraubgewinde mit der Wandung des Strömungskanals verbindbar ist.
